# EUROPEAN PATENT APPLICATION

(11) **EP 4 270 272 A1**
(43) Date of publication of application: **01.11.2023**
(21) Application number: 22197266.4
(22) Date of filing: 22.09.2022
(51) Int. Cl.: G06Q 10/00, G06Q 10/06, G06Q 50/00

(54) **A COMPUTER-IMPLEMENTED MODEL FOR MEASURING AND REPORTING SOCIAL IMPACTS OF SOCIAL ENTERPRISES**

(71) Applicant: IER - Institute for Economic Research, 1000 Ljubljana (SI)
(72) Inventor: Crnigoj, Matjaz, 1000 Ljubljana (SI); Slabe-Erker, Renata, 1000 Ljubljana (SI); Primc, Kaja, 1000 Ljubljana (SI)
(74) Representative: Patentni Biro AF d.o.o.

(57) **Abstract**

The computer-implemented model for determination of social impact of social enterprises comprises:
- Module 1 for entering information about the social enterprise, status, purpose of measurement, assets that are to perform activities, stakeholders, and social groups, as well as social problems and SDGs addressed by the social enterprise,
- Module 2 for defining the measurement plan, including a selection of indicators related to stakeholders, activities, direct results, results independent of the organisation's activities, and indirect results, as well as a selection of assets for which the change will be measured,
- Module 3 comprising measurements of elements across the impact value chain using pre-defined indicators in the second module, wherein quantity/number/value, as well as a unit of measurement, is entered for each indicator,
- Module 4 comprising an examination and analysis of the results,
- Module 5 for generating a report on social impact.

## Description

### Field of the invention

The invention belongs to the field of data processing systems or methods, specially adapted for financial, managerial, supervisory, and administrative purposes, more precisely to the field of data processing systems and methods adapted for measuring and reporting social impacts of social enterprises. The invention relates to a computer-implemented model for measuring and reporting social impacts of social enterprises.

### Background of the invention and the technical problem

In the context of this application, the expressions used throughout the document are to be interpreted in the following manner:

| | |
|---|---|
| social | Relates to society, individuals, and communities as well as relations among them (European Commission, 2014: Proposed approaches to social impact measurement, available at: https://op.europa.eu/en/publication-detail/- /publication/0c0b5d38-4ac8-43d1-a7af-32f7b6fcf1cc). Furthermore, the expression "social" covers everything that influences society, including environmental, economic or governance aspects. |
| impact | Indicates the ultimate significance and transformative effects of an intervention or activities (OECD, 2019: Evaluation Criteria: Adapted Definitions and Principles for Use, Accessed 14 Sept. 2022 at: |
| | http://www.oecd.org/officialdocuments/publicdisplaydocume ntpdf/?cote=DCD/DAC(2019)58/FINAL&docLanguage=En). An impact denotes changes across the whole impact value chain, including immediate outputs, intermediary outcomes, and long-term impacts. In a narrow sense, the impact can also be understood as results that arise exclusively from the intervention and would not emerge without it. |
| output | Activities that generate direct results are recognised as tangible results of performed activities. OECD (2019) defines outputs as the products, capital goods and services resulting from the intervention or activities. |
| outcome | Outcomes emerge further on an impact value chain and represent short-term and medium-term effects of outputs. |
| measurement | Quantitative measurement covers the analysis and display of studied properties of studied subjects. |
| social enterprise | A business with a specific social objective that serves its primary purpose. Social enterprises perform entrepreneurial activities to generate benefits for society and the environment. Profit maximisation is inferior to other goals and the profits are principally used to fund their activities. |

According to the traditional finance theory, the objective of an enterprise is to serve the interests of its owners - shareholders and thus to maximise profits or shareholders' value. The widely accepted measure of the enterprise's success is its financial return. However, enterprises are recently becoming widely aware of their impacts beyond investors' financial returns, i.e., social impacts. In contrast to the evaluation of financial results, social impact is more challenging to measure, as measurement techniques and impact indicators have to be adapted to various forms of impact. If financial reporting is conducted by generally accepted accounting standards, such as International financial reporting standards (IFRS) and generally accepted accounting principles (GAAP), social impact measurement and reporting methodology is not standardised similarly. As the standards have only recently emerged, most enterprises use their own approaches and methodologies.

One would expect social impact measurement to first emerge in social economy and enterprises. These entities are believed to be driven by the interest of other stakeholders and pursue different objectives beyond financial returns. However, despite their focus being heavily directed toward social impact, these entities are relatively small, with limited resources and competencies to measure social impact.

Perhaps surprisingly, social impact measurement development is driven by the awareness of large corporations and traditional investors. Large corporations fall under significant pressure from the public and government initiatives to become aware of the considerable impact these entities have on society and the environment. Investors have started to realise that following goals beyond finance return can positively affect corporate financial performance and, thus, their returns. Recently, a promising development of standards and methodologies to measure non-financial results in the corporation has been observed.

However, according to the opinion of OECD (2021: Social Impact Measurement for the Social and Solidarity Economy. OECD Global Action Promoting Social & Solidarity Economy Ecosystems", OECD Local Economic and Employment Development (LEED) Papers, No. 2021/05, OECD Publishing, Paris, https://doi.org/10.1787/d20a57ac-en), most standards and methodologies of social impact measurement and reporting are not suitable for social enterprises. The existing standards and methodologies were primarily developed for large traditional corporations and are focused more on environmental than social aspects. Social enterprises have various outputs, outcomes, and impacts that the existing solutions cannot cover. Therefore, social enterprises often fail to assess and/or report their social impact sufficiently. As a result, social enterprises cannot effectively allocate resources and manage their activities because a manager makes decisions having only incomplete data. Unable to present the results of their activities, social enterprises experience difficulties acquiring financing from governments and investors. A lack of funding decreases the social impact these entities could create in society. This results in a vicious circle that needs to be broken.

The first goal of the invention is thus to design a computer-implemented, easy-to-use model for measuring and reporting social impacts in social enterprises. However, the model could serve other purposes. Policy-makers are becoming widely aware that effective policy-making must be grounded on a solid empirical basis. In addition, policy-makers are gradually shifting financing, procurement, and regulatory efforts from activities to outcomes. The model should allow aggregating data collected on different levels, such as industries or activities, sustainable development goals (SDG), stakeholders or target groups addressed, etc. Therefore, the second goal is to develop the computer-implemented model in such a manner that it will serve as a tool for policy-makers.

### Prior art

Several systematic frameworks, guides, approaches, methodologies, methods, and standards and systems for measuring and reporting social impacts in enterprises are currently available. The OECD (2021) classifies them by complexity, from simple identification of social impacts to advanced impact measurements that use standardised metrics. In addition, they differ also depending on the level of social impact creation (e.g., outputs, outcomes, impacts) and the observed unit. The social impacts can be measured at the level of a project or intervention, organisation, industry, or country.

The theory of change (ToC) is the most used underlying concept for evaluation and social impact measurement in enterprises, not-for-profit entities, international development, research, and government sectors to promote social change. The logic model of ToC helps to explain how an organisation intends to achieve its desired impact. It defines desired long-term goals and then works back from these to identify all the conditions (outcomes and outputs) that must be in place for the goals to occur. By systematically describing the process of creating social impacts, the model helps to understand the process of change, which enables better planning and better measurement of social effects (Center for Theory of Change, 2017: Theory of Change. Accessed 14 Sept. 2022 at: https://www.theoryofchange.org/).

Similarly, the global indicator framework for Sustainable Development and related sustainable development goals (SDGs) set up by the United Nations General Assembly are integral to many existing methodologies for measuring and reporting social impacts. This is a collection of 17 interlinked global goals and their targets designed to be a "blueprint to achieve a better and more sustainable future for all and the world by 2030" (United Nations, Accessed on 14. Sept. 2022, at: https://unemg.org/our-work/supporting-the-sdgs/the-un-sustainable-development-goals/). The 17 SDGs are: No poverty, Zero hunger, Good health and well-being, Quality education, Gender equality, Clean water and sanitation, Affordable and clean energy, Decent work and economic growth, Industry, Innovation, Infrastructure, Reduced inequality, Sustainable cities and communities, Responsible consumption and production, Climate action, Life below water, Life on land, Peace, Justice and institutions, Partnerships for the goals. To facilitate monitoring, various tools exist to track and visualise progress towards the goals. The online publication SDG Tracker presents available data across all SDGs. Despite being strategically very important, the presented SDG indicator framework cannot be used by organisations to measure their social impacts directly. However, they enable easy connection to some of the available systems (e.g., IRIS +) and standards (e.g., Global Reporting Initiative (GRI) Standards) for measuring and reporting social impacts. This enables organisations to understand better, communicate and manage their contribution to sustainable development.

Before presenting the most widely used comprehensive methodologies for measuring and reporting non-financial impacts, the distinction between frameworks and standards has to be established. The systematic frameworks provide principles-based guidance on how information is structured and prepared and what broad topics are covered in reports. On the other hand, the standards provide specific, detailed, repeatable and harmonised requirements for what needs to be reported on each topic, including measurement methods, frameworks and standards that complement each other and are designed for joint use (IFRS Foundation, 2022a: SASB Standards & Other ESG Frameworks, accessed on 14 Sept. 2022 at: https://www.sasb.org/about/sasb-and-other-esg-frameworks). For example, The Integrated Reporting Framework (IR Framework), developed by the International Integrated Reporting Council (IIRC), defines the key principles and elements of the content of the integrated report. IR Framework accrues important information about an organisation's strategy, management, performance, and opportunities in a way that reflects the business, social and environmental context. Based on integrated or system thinking, the IR Framework promotes and enables a better understanding of how value is created and improves organisational decision-making (IFRS Foundation, 2022b: Integrated Reporting Framework, Accessed on 14 Sept. 2022 at: https://www.integratedreporting.org/resource/international-ir-framework). However, the framework does not prescribe specific indicators, measurement methods and content organisations should report. This remains in the domain of organisations, including the use of generally accepted measurement methods. Since the measurement of the social impacts of an organisation is much more informative if the results can be compared with the results of other organisations, various standardised indicator systems have gained popularity in recent years. Therefore, the IR framework is widely used in conjunction with some established standardised non-financial reporting standards, such as the GRI standards, IRIS+ and the Sustainability Accounting Standards Board (SASB). The SASB and IIRC are merged into one organisation, offering organisations a more comprehensive corporate reporting framework.

The most used standards for non-financial reporting are *The global standards for sustainability reporting* (GRI Standards). The GRI Standards enable organisations to understand and report on their impacts on the economy, environment, and society in a comparable way (Global Reporting Initiative, 2022; accessed on 14 Sept. 2022 at: https://www.globalreporting.org/standards/). The GRI Standards allow organisations to publicly report the impacts of their activities in a structured way that is transparent to stakeholders and other interested parties. The GRI Standards are a modular system of following interconnected standards:
- universal standards relevant for all organisations,
- sector standards used for particular sectors,
- topic standards, each dedicated to one specific topic or impact.

Universal standards are general, describing the purpose, concepts and use thereof. In this part, the organisation defines its organisational structure, reporting practice and topics that are important for the impacts defined by the organisation. Sector standards aim to increase reporting quality, completeness, and consistency. Currently, the only available is the standard for oil and gas sector. Sector standards will cover topics relevant to most organisations in a particular sector and specify the appropriate disclosures for reporting on these topics. Finally, the topic standards contain provisions regarding reporting on individual topics or types of impacts, such as standards on waste, health, and safety at work, etc. Each standard in this section includes a topic overview and disclosures specific to each topic and how the organisation manages individual impacts.

SASB standards (IFRS Foundation, 2022a) are another example of standards often used in practice for impact measurement. SASB standards guide disclosures of financially significant information about organisations' sustainability elements and effects to their investors. Although the standards are linked to the IR Framework, they can be used in conjunction with it or independently. Available for 77 industries, the standards identify a subset of the environmental, social and governance (ESG) issues most relevant to financial performance in each sector. The standards define a minimum set of financial and material sustainability topics for each sector - dimensions and related elements.

Catalogue IRIS+ developed by Global Impact Investing Network (GIIN) is a widely accepted system of impact accounting used to measure, manage, and optimise impacts. The IRIS+ system comprises of basic concepts and a catalogue of metrics comprising almost 700 different indicators. For each indicator, a detailed definition and calculation, unit purpose and suitability for use are given. The IRIS + system and metrics evaluate the impact via five different impact dimensions (GIIN, 2022: Accessed on 14 Sept. 2022 at: https://iris.thegiin.org):
- what: understanding results contributed by the enterprise and the importance of these results for participants.
- who: understanding which participants create profit and how disadvantaged they were previously.
- how much: how many participants have achieved the impact, what was the level of change and how long the effect lasted.
- contribution: evaluation if the plans of the company and/or investor have caused an impact and to what extent.
- risk: the probability that the impact will differ from the expected impact.

Despite significant progress, no generally accepted framework, standard or system is available. Moreover, most used approaches to impact measurement presented above are poorly adapted for use in the social economy. These are created in the form of guidelines primarily for traditional enterprises and under the institutional investors' influence, who, despite looking outside the framework of financial results, prioritise impacts positively related to an enterprise's long-term financial performance. Moreover, social enterprises have unique characteristics, such as different sources of financing and income, as well as different management and ownership compared to for-profits. In addition, they are characterised by a wide variety of effects that they produce, which makes existing standards often insufficiently flexible to cover this variety. The OECD (2021) thus concludes that a middle way is needed, which on the one hand, provides standardised indicators while, on the other hand, still allows enough flexibility to capture the very different social effects that organisations in the social economy create.

In response to the need for a solution that would simplify the measurement and reporting social impacts in social enterprises, the development of various tools has been on the rise. Among these tools, two groups dominate. In the first group, there are step-by-step guides through measuring and reporting social impacts, which refer to the use of existing frameworks. For example, the German government supported the development of the Social Impact Navigator (Phineo, 2022: Social Impact Navigator. Accessed on 14 Sept. 2022 at: https://www.social-impact-navigator.org) to help plan and launch projects for non-profit enterprises, the Finnish government supports the Hyvan Mitta project (Hyvan Mitta, 2022: Accessed on 14 Sept. 2022 at: https://www.hyvanmitta.fi/yhteystiedot), a systematic framework that provides advice and examples of measuring the social impact of organisations operating in the social economy and in 2021 established Impact Management Platform (Impact Management Platform, 2022: Accessed on 14 Sept. 2022 at: https://impactmanagementplatform.org) where important (global) institutions, such as the IFC, OECD, UNDP and UNEP FI, have contributed their knowledge to the measurement and reporting of social impacts of a wide range of organisations, from corporates to small and medium-sized enterprises and social enterprises. The second group of tools, more directly related to the invention, offers the possibility of collecting data, measuring, and reporting social impacts at the level of organisation using computer-implemented models. Two are particularly relevant: the Social Impact Measurement Tool, provided by the Ministry of Labour and Social Affairs in Greece, and the Impact Wizard Tool, developed in Belgium.

The Social Impact Measurement Tool (Koinonikos Antiktypos, 2021: Accessed on 14 Sept. 2022 at: https://koinonikosantiktypos.gov.gr/#!/) is an online tool intended for social enterprises and organisations to measure and report their social impacts. Like most other approaches and models used for social impact measurement, the Social Impact Measurement Tool is based on ToC. After entering basic information about the organisation, purpose of the measurement and stakeholders, the process of measuring and assessing social impacts is carried out in seven steps. The following questions illustrate activities in each step:
1. What is the social purpose (i.e., the organisation's mission) and how does it achieve it?
2. Who experiences changes due to the activities of the organisation?
3. What are the changes experienced by stakeholders?
4. How can changes be measured and validated?
5. To what extent is each change a result of the organisation's activities?
6. How long does it take to measure changes?
7. What is the significance of the changes?

Initially, it is necessary to identify the audience for which the measurement and reporting are intended. This step determines how detailed the social impact measurement is.

In the first step of the tool, the organisation's mission is determined and how it achieves it is presented. Here, ToC and intervention logic (i.e., visual depiction that demonstrates the relationship between proposed interventions and their intended effects) are defined. A clear understanding of the mission, goals and their dependence on the activities is critical for measuring social impacts and strategic planning of the organisation's activities.

The second step defines stakeholder groups and subgroups and their size. This information is important for the organisation to measure social impacts and develop more targeted products and services.

In the third step, the tool offers a value chain logic where it is necessary to start from the organisation's activities and then separately show the direct results (outputs) and, finally, the impacts. Suppose to find something new, inconsistent with the purpose specified in the first step or the stakeholders identified in the second step; in this case, it is necessary to return to the beginning and complete the analysis accordingly.

The planning and implementation of the measurement of social effects are carried out in the fourth step. First, defining an indicator or set of indicators for each desired and planned change is necessary and then evaluating the impact.

In the fifth step, the evaluation of the impacts continues. It is examined to what extent the changes we perceive in the stakeholders affect the organisation's activities. For each detected impact, it is first assessed who or what else contributed to the changes, the probability that the changes would have occurred without the organisation's activities, and finally, what was the contribution of other factors. The tool does not require precise estimates, but probabilities and contributions are evaluated descriptively using an ordinal scale.

The next step addresses the change's duration. For each change, it is necessary to define the period of measurement. Suppose an organisation offers training for the unemployed to improve their employability. The social impact of this action must be observed over a longer period to determine whether the unemployed get their jobs and, more importantly, keep them.

In the last, seventh step, the significance of the changes and created social impacts are evaluated. For each identified impact, its importance to stakeholders is evaluated. This step enables organisations to better plan strategically and focuses on activities and goals with a significant meaning for the stakeholders.

The Social Impact Measurement Tool presented above uses a rather complex approach. The "all-or-nothing" approach requires each change to be not just measured but also validated. Validating the results requires users to isolate the effects that directly result from the activities, meaning adjusting the results for what would happen anyway - dead-weight and the contribution of other factors - attribution. This is basically a question of casual interference that requires complex statistical techniques to provide satisfactory answers and goes well beyond the capacities in enterprises. Moreover, the presented tool can only partially serve managerial purposes as it was primarily developed for reporting. Being almost entirely self-descriptive, both by groups of indicators and by addressed stakeholders, it, in contrast to the presented invention, also does not allow aggregation of the results and cannot serve as a tool in policy-making. Finally, the tool also does not provide a direct link to the SDG goals.

The Impact Wizard Tool (Social Innovation Factory, 2022: Accessed on 14 Sept. 2022 at: https://impactwizard.eu) is an online tool that guides various types of organisations through the social impact assessment process based on collected data. The tool integrates several existing concepts and frameworks, such as ToC, and SDGs, to establish a comprehensive methodology for measuring and reporting social impacts.

The tool consists of five modules:
- Context and focus (optional modul),
- ToC,
- Measurement plan,
- Measure and analyse,
- Maximise your impact (optional module).

In the Context and focus module, the organisation's mission and goals are defined, the stakeholders are identified and the interventions (activities, services, or products) are listed.

Within the ToC module, the organisation defines the intervention logic, i.e., how a particular social problem is addressed and which stakeholders, activities and conditions are necessary to achieve the set goals. Here, a distinction is made between short-term goals or results (1-12 months), medium-term goals or results (1-2 years) and long-term goals (after more than two years), which, in addition to changes in the target population, also include impacts on society.

In the Measurement plan module, indicators and measurement methods are determined. The module starts with the question related to the purpose of measurement and reporting. Then users of the social impact assessments are defined and the relevant questions determined. In the next step, from the goals defined in the previous module, those where changes and the creation of social impacts would like to be measured are selected. An indicator is determined for each of the goals selected, with the help of a database of indicators already used in other organisations. In addition, it is also determined who and where the measurement will be performed and the method of measurement.

The Measurement and analysis module is about data acquisition, including suggestions for data capture, such as survey questionnaires, assessment sheets, and proposals for capturing quantitative data and assessments. Once the data is selected, analysis can be performed.

In the last (optional) module, different methods for analysing the created social impacts are available, as well as the monitoring of the implementation of the activities and the process of creating social impacts and, finally, the preparation of a report on the created social impacts. For the created social impacts, the organisation defines the necessary investments - inputs and activities evaluates the size of the impacts and defines the negative impacts. Thus, depending on the findings, the organisation can return to the first module and improve the planned activities or change the set goals.

The Impact Wizard tool integrates knowledge from established organisations, projects, collaborations, and networks, such as the Big Society Capital, SROI network, GRI, United Nations General Assembly (SDGs) and Global Value Exchange. This represents an important feature of the tool used by a wide range of organisations. The collection of more than 400 outcomes and 1300 indicators available for selection is derived from existing databases and knowledge. The tool's wide scope might represent an administrative burden for social enterprises, mainly at the expense of selecting parameters (e.g., SDG's targets, types of stakeholders, indicators), which are not adapted for their purposes, and the lack of conditional design.

### Description of the solution to the technical problem

The known solutions, especially the Impact Wizard Tool, exhibit high complexity, which is not suitable and not needed for social enterprises. The present invention aims to solve this and other disadvantages of existing solutions to provide standardised indicators while allowing enough flexibility to capture different social impacts that organisations in the social economy create. The technical problem is solved with the computer-implemented model as described in the independent claim, wherein preferred embodiments of the said model are defined in dependent claims.

The complexity of measurement and reporting of social impacts is reduced when there is sufficient simplification and standardisation of the measurement process. The invention is arranged to allow social enterprises to choose the level of complexity of social impact measurement. For example, the user can measure only direct results (outputs), which can be easily evaluated, but not indirect results (outcomes or impact), which are more challenging to evaluate. The invention trades off between standardisation and flexibility, as the data is collected in a maximum possible standard format, on the one hand, while on the other, the model offers social enterprises enough flexibility to be able to assess very different social impacts. This was achieved by integrating existing frameworks and system indicators (IRIS+ and SDGs) in an interrelated way and adapting the process of social impact measurement to the competencies of social enterprises.

In addition to reporting, the invention anticipates the use of data about social impact, as well as the data about resources, activities (and their costs) and the outputs generated while measuring social impact in managing a social enterprise. By analysing the data using built-in well-established approaches and methods, such as SROI, social enterprises understand their performance, market share, productivity, cost-effectiveness, and social returns, which serve as the basis to better plan and manage their activities. Social enterprises are expected to allocate resources effectively with limited financing (as well as other) resources in the social economy. The implementation of sufficient standardisation in the social impact measurement process also enables the aggregation of the collected data in a way that reflects the need of policy-makers (e.g., the direct link between social enterprises' activities, addressed social/environmental problems and corresponding SDGs, etc.).

The invention creates several specific technical effects, including but not limited to:
- tailored social impact measurement as social enterprises can choose the level of complexity based on their competencies and needs
- more efficient measurement and reporting of long-term goals with the SDGs' targets adapted to social enterprises,
- standardised data capture by standardising the sets and categories of stakeholders and target groups, assessing activities across pre-defined industries, SDGs, etc.
- upgraded social impact measurement and reporting by adding stakeholder indicators measured by the beneficiaries from specific target groups of selected IRIS+ stakeholders,
- more efficient indicator search strategy (based on the corresponding IRIS+ Primary Impact Category of each activity used to report short-term social impacts),
- upgraded social impact measurement and reporting by measuring social impacts of activities not directly related to the field of activity by using relevant cross-category IRIS+ indicators for each selected IRIS+ stakeholder.

The model, according to the invention, comprises:
- Module 1 requires entering information about the enterprise, status, purpose of measurement, assets that are to perform activities, stakeholders, and social groups, as well as social problems and SDGs addressed by the social enterprise,
- Module 2, in which the user defines the measurement plan including a selection of indicators related to stakeholders, activities, direct results, results independent of the organisation's activities, and indirect results, as well as a selection of assets for which the change will be measured,
- Module 3 comprises measurements of elements across the impact value chain using pre-defined indicators in the second module, wherein quantity/number/value, as well as a unit of measurement, is entered for each indicator,
- Module 4 comprises examination and analysis of the results showing addressed stakeholders/target groups, performed activities, results and performance, wherein preferably change in time and realisation, as well as other more complex analysis, such as productivity and cost-benefit analysis, are performed,
- Module 5, in which the report on social impact is generated, which comprises:
   ∘ basic data on the social enterprise (registry data),
   ∘ social problems that the social enterprise addressed with its activities and SDGs to which the social enterprise contributes,
   ∘ indicators of addressed stakeholders/target groups,
   ∘ performed activities,
   ∘ indicators of results - direct results and results independent of the field of activity.

The model is arranged to guide the user through the measuring process, from analysing its business model to planning and designing the measurement, measurement and results and preparing the report. Capturing the data in a standardised way allows the aggregation of data on various levels and for multiple purposes. The model serves as a measurement and reporting tool for social enterprises to inform different stakeholders about their social impact and a management tool to allocate resources effectively in social impact generation.

Besides, it serves policy-makers to get a clear picture of the situation in the social enterprise sector, enabling better evaluation and design of its policy actions. Some important distinctions in comparison with known models are:
- connection of long-term goals with the adapted SDG' targets, wherein constraints with regards to the SDG's targets are created based on the activity of the social enterprise,
- connection of short-term goals with IRIS+ indicators, wherein for each indicated short-term goal at least one field of activity from IRIS+ is selected,
- implementation of cross-category IRIS+ to cover impacts of activities that are not directly connected to the field of activities but nevertheless address social/economic/environmental issues, wherein the list of indicators is provided with regards to participants for which impact is anticipated by the social enterprise.

According to the invention, the computer-implemented model is preferably programmed in Visual Basic for Applications (VBA) programming language with enabled macros. In the preferred embodiment, the computer-implemented model is an excel file with executable instructions upon entry of inputs into dedicated fields, wherein some limitations are made regarding previously selected entries. For example, only relevant indicators are shown for the selected field of activity and/or addressed social groups. The excel file may be stored on a computer-readable medium and/or on a computer arranged to execute the excel file. The choice for the excel file is that this is a standard tool in finances and accounting; hence, the enterprises and users are well aware of it and can master it easily. Alternatively, the model can be implemented in any other way that allows entry of data for each of the modules and suitable analysis and reporting.

The invention also relates to a computer-readable medium and/or a computer with the computer-implemented model as described above and arranged to allow measurement and reporting of social impacts of social enterprises.

### Brief description of drawings

The computer-implemented model for measuring the social impacts of social enterprises according to the invention will be described in further detail using exemplary embodiments and figures, which show:
- Figure 1: Overview of the five modules forming the computer-implemented model according to the invention
- Figure 2: Schematic representation of key steps of the modules
- Figure 3: Example of a drop-down list of SDGs to which the social enterprise contributes by solving a particular problem
- Figure 4: Example of long-term goals from the drop-down list of redesigned SDGs' targets
- Figure 5: An example of an indicator of direct results from the drop-down list of IRIS+ indicators in the agriculture area of activity
- Figure 6: An example of result indicators that are independent of the field of activity and related to buyers
- Figure 7: An example of a presentation of addressed stakeholders/target groups in the report

### Detailed description of the invention

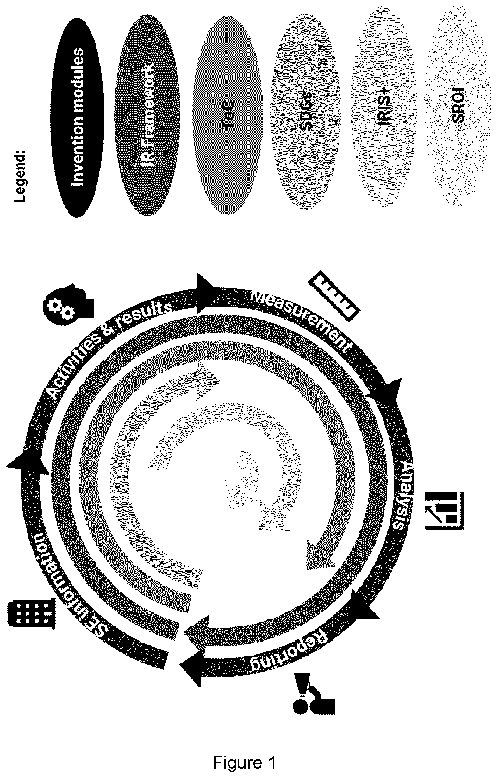

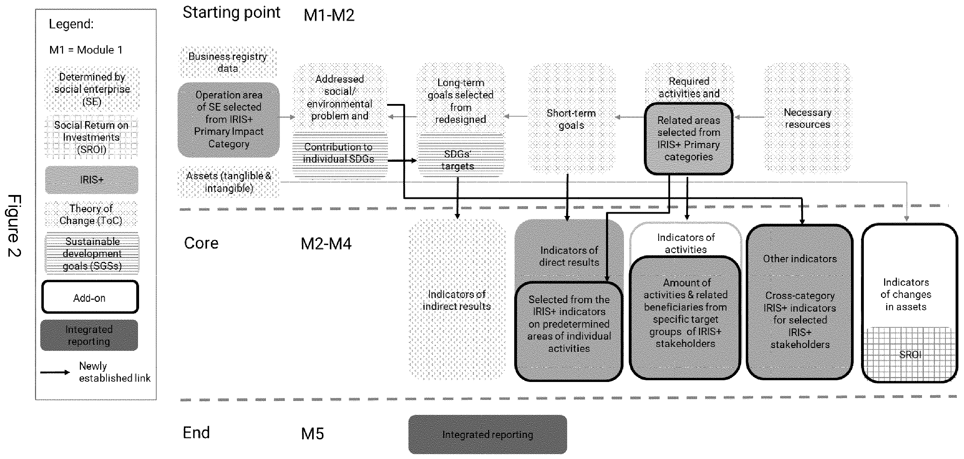

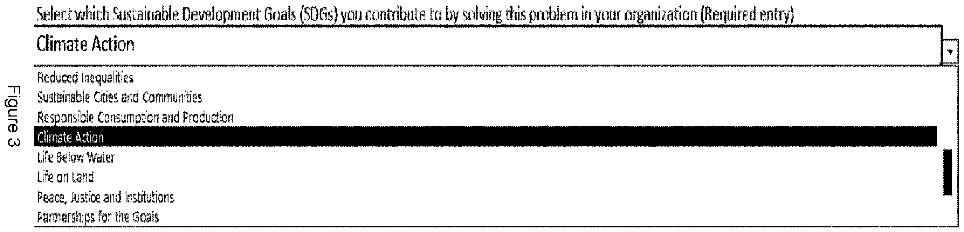

The model comprises five modules described below and shown in figure 1, with some examples of the drop-down lists presented in figures 3 to 7. Figure 1 also shows interconnections with existing frameworks, standards, and methodologies, such as ToC, SDGs, IR Framework, IRIS+ and SROI. The modules and the steps within modules, as shown in figures 1 and 2, follow each other sequentially - the definitions and selections in the previous modules define the contents and the offered sets of measuring elements in the following. Some data and content must be entered, while others are optional. Mandatory entries are marked with "(Mandatory entry)" or a similar note, while optional steps are indicated as optional.

Individual cells are filled in three different ways:
- the user enters the text,
- the user selects content from the drop-down list,
- cells are automatically filled based on previously entered or selected contents.

The way of data entry may be made more user-friendly, for example, marked with a particular cell colour.

Figure 2 is a schematic view of the model, wherein circled bubbles are, according to the inventors' knowledge novel, concerning known methods and models. The model requires first entering/defining data related to social problems addressed and goals (short-term, long-term) targeted by the social enterprise, then the required activities and resources. Indicators are selected and later measured based on selected goals and activities by entering the number of performed activities, addressed stakeholders, achieved goals, etc. The model then combines the data and allows the user to analyse its performance and generate a report about the social enterprise activities and results - social impact.

The model will be further described module by module, each divided into steps performed by the user and/or automatically by the model based on the user's previous entries.

### Module 1: Starting points and assumptions

Module 1 is where the process of measuring social impact begins. It comprises eight steps: (1.1) general and registry data about a social enterprise, (1.2) activity status, (1.3) purpose of measurement, (1.4) assets of the social enterprise (optional), (1.5) field of activity, (1.6) stakeholders and social groups addressed by the social enterprise, (1.7) addressed social problems and pursued SDGs, and (1.8) logical model of ToC.

### Step 1.1

In the first step, basic data for identifying the social enterprise, such as registration number, size, legal form of organisation and contact information, are entered. The model incorporates the registry of social enterprises; thus, the user needs to enter only the registration number.

### Step 1.2

Step 1.2 refers to reporting on the status of the organisation's activities in the reporting year. The user reports on whether the organisation is active or inactive by selecting one of the options from the drop-down list:
(i) The social enterprise does not carry out activities to solve social problems and/or does not create social impacts and
(ii) The social enterprise carries out activities to solve social problems and/or create social impacts.

In the case of mandatory social impact reporting, this step eliminates inactive social enterprises that choose the first option.

### Step 1.3

The user then selects the purpose of social impact measurement from the drop-down list, which determines the scope and complexity of the subsequent measurement process. The user chooses between the following options: (i) Mandatory Reporting, (ii) Extended Reporting (mandatory reporting and additional optional components) and (iii) Extended Reporting with the use for Management Purposes.

### Step 1.4

Step 1.4 offers an option to define assets (capital) of social enterprise for those users that chose Extended Reporting in step 1.3. Namely, the results of a social enterprise's activities can be reflected in a change of assets, and a social enterprise might want to report this as well. Pre-defined assets items is available for four types of capital and follow the IR framework:
- manufactured capital (for example, buildings, equipment, land);
- human capital (for example, employees, permanent external staff, volunteers);
- intellectual capital (knowledge-based intangibles, such as intellectual property - patents, copyrights, etc. and organisational capital - business models and other strategic elements, policies, formalised internal procedures);
- financial capital (for example, equity, membership fees, loans, project financing or grants).

### Step 1.5

The core fields of activity are consistent with the IRIS+ Primary Impact Category. The choice of the field of activity determines the framework of the content offered in the following measurement (such as goals and indicators). The user selects one of the sixteen sectors from the drop-down list: agriculture, biodiversity, ecosystem and biodiversity, climate, diversity and inclusion, education, employment, energy, financial services, health, infrastructure, land, pollution, real estate, waste, and water.

### Step 1.6

The user selects up to three stakeholders addressed by the social enterprise's activities from the drop-down list of the following five IRIS+ categories: users (consumers), distributors - customers (companies, organisations, sole proprietors), employees, environment (users of the environment) and suppliers. In addition, up to three target groups can be selected for each stakeholder. The list of individual stakeholders and their respective target groups is shown in Table 1.

**Table 1: Stakeholders and their respective target groups**

| **Stakeholders** | **Target groups** |
|---|---|
| Users (consumers) | • persons with special needs, |
| | • unemployed, |
| | • NEETs (Not in Education, Employment, or Training), |
| | • older people, |
| | • migrants, |
| | • drug addicts, homeless people, |
| | • former prisoners, |
| | • individuals below the poverty line, |
| | • regular user (consumers). |
| Customers (companies, organisations, sole proprietors) | • other social enterprises, |
| | • regular customers (companies, organisations, sole proprietors) . |
| Employees | • people with disabilities, |
| | • former NEETs, |
| | • older people (50+), |
| | • migrants, |
| | • drug addicts, |
| | • homeless people, |
| | • former prisoners, |
| | • individuals below the poverty line, |
| | • young people, |
| | • individuals below the poverty line. |
| Environment (users of the environment) | • individual users / beneficiaries of environmental goods or services, |
| | • companies as users of environmental goods or services, |
| | • local residents as users of the preserved natural environment, |
| | • visitors as users of the preserved natural environment (e.g., tourists, recreationists), |
| | • special groups of users of the preserved natural environment (e.g., students, researchers), |
| | • potential users of the natural environment (nature lovers who have not yet visited the place), |
| | • connoisseurs of the natural resource, for whom it has value simply because it exists. |
| Suppliers | • individuals from vulnerable groups, |
| | • companies, organisations that employ vulnerable groups, |
| | • other social enterprises, |
| | • regular suppliers. |

### Step 1.7

In step 1.7, the model is configured to allow the user to identify up to five social problems the social enterprise addresses with its activities. *An example of a social problem is the underdevelopment of the countryside and poor yields per hectare, which affect the abandonment of farming.* For each problem, the user selects up to three SDGs from a drop-down list, to which the social enterprise contributes by solving the stated problem (Figure 1).

The user chooses between 17 SDGs: No poverty, Zero hunger, Good health and well-being, Quality education, Gender equality, Clean water and sanitation, Affordable and clean energy, Decent work and economic growth, Industry, Innovation, Infrastructure, Reduced inequality, Sustainable cities and communities, Responsible consumption and production, Climate action, Life below water, Life on land, Peace, Justice and institutions, Partnerships for the goals.

Figure 3 shows an example of the drop menu for selecting the SDGs.

### Step 1.8

Then, the user is asked to analyse the social enterprise's business model using ToC. The user prepares a logical model describing its intervention logic, which helps to understand better and define a social problem(s) and plan goals and required activities.

For each identified problem, the user first selects up to five pursued long-term (ultimate) goals from the drop-down list containing adapted SDGs' targets (Figure 2). The set of SDGs' targets depends on the SDGs selected in step 1.7. If there is no suitable choice, the user can write down the long-term goal himself.

In the next section, short-term goals are defined. *An example of a short-term (intermediate) goal is training of farm owners.* The user descriptively fills in the corresponding cells with the help of the answer to the question: What is the necessary intermediate goal to be able to expect the achievement of the long-term (ultimate) goal?

In the end, the user defines the activities that need to be carried out to achieve the set goals (e.g., *information and education about sustainable plant protection*)*.* In addition to the activity, the user specifies two assumptions that must be fulfilled to achieve the goals. These are the conditions (e.g., *established good cooperation with institutions, local communities, and media*) and the stakeholders (e.g., *Ministry responsible for social affairs, Centers for social work, Employment Office, municipalities, Health centres, media*) who should participate in solving this problem with the planned activity.

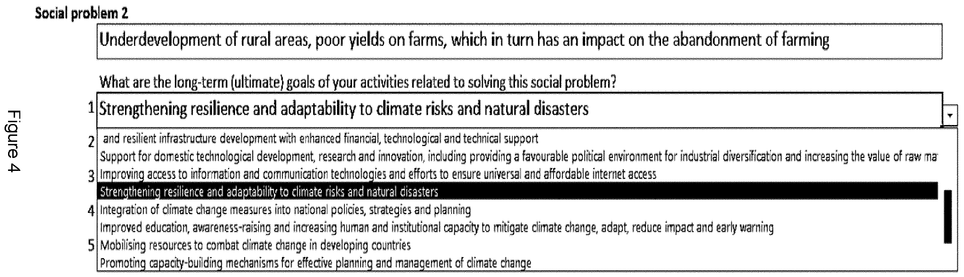

Figure 4 shows an example of long-term goals based on the SDGs.

### Module 2: Preparing the measurement plan

In Module 2, the computer-implemented model is arranged to allow the social enterprise to prepare a plan for measuring social impacts. The module comprises at least four, preferably six steps: (2.1) indicators of stakeholders, (2.2) activity indicators, (2.3) indicators of direct results, (2.4) indicators of results independent of the field of activity (general indicators), (2.5) indicators of indirect results (outcomes and impacts; optional) and (2.6) the selection of items of assets for which the social enterprise would like to measure changes as a result of the enterprise's activities (optional).

### Step 2.1

In this step, the user defines addressed stakeholders and their respective target groups (from Module 1) that it would like to report in terms of the number of addressed individuals or organisations.

### Step 2.2

In the activity indicators step, a set of activities by social problems that the user defined in Module 1 is displayed. Here, the user describes each activity in more detail (e.g., conducting workshops and consulting). Then, from the drop-down list, the user selects the area of activity (the same 16 areas as in step 1.4) to which the individual activity belongs. This step is crucial as it affects what will be offered in terms of results IRIS+ indicators in the next step.

### Step 2.3

In step 2.3, the model displays targeted direct results (i.e., short-term goals from ToC in Module 1) for each defined activity. The user selects up to five IRIS+ indicators for each direct result from the drop-down list. The list of indicators of direct results is conditioned by selecting the area of activity in step 2.2. The users define their own indicator if there is no suitable indicator on the drop-down list. An example of an indicator of direct results is the number of individual small farmers who were clients during the reporting period (Figure 3).

Next to each indicator, there is a drop-down list in which the user determines who measures the results. Some options are the user himself/employees, external help (interviewer, laboratory), and automatically volunteers (e.g., GIS). Then, information about how often the results are measured has to be entered, wherein some options are monthly, semi-annually and annually. Additionally, next to each indicator is a space for a description of data sources.

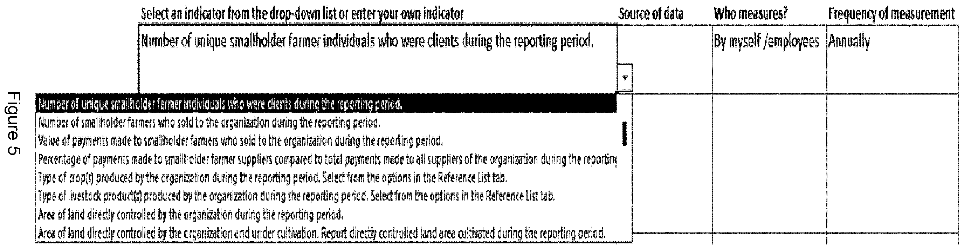

Figure 5 shows an example of a few indicators of direct results from the drop-down list of IRIS+ indicators in the agriculture area of activity.

### Step 2.4

IRIS+ also covers indicators suitable for multiple fields of activity, the so-called cross-category indicators. Due to their unmanageable number, these indicators are not offered among direct result indicators. Instead, a separate set of result indicators, independent of the field of activity, is available.

The same as in step 2.3, the user selects indicators from the drop-down list of indicators from IRIS+, but this time according to the previously selected IRIS+ stakeholders (i.e., IRIS+ stakeholder groups: users (consumers), distributors - customers (companies, organisations, sole proprietors), employees, environment (users of the environment), suppliers, financial results, and miscellaneous). The model offers the users only relevant cross-category indicators for the previously selected stakeholder groups. The users define their own indicator if there is no suitable indicator on the drop-down list. Next to each indicator are "who measures" and "how often measures" drop-down lists and space for a description of data sources.

For the options of Extended Reporting or Extended Reporting for Management purposes in Module 1, two more steps are optionally available in Module 2.

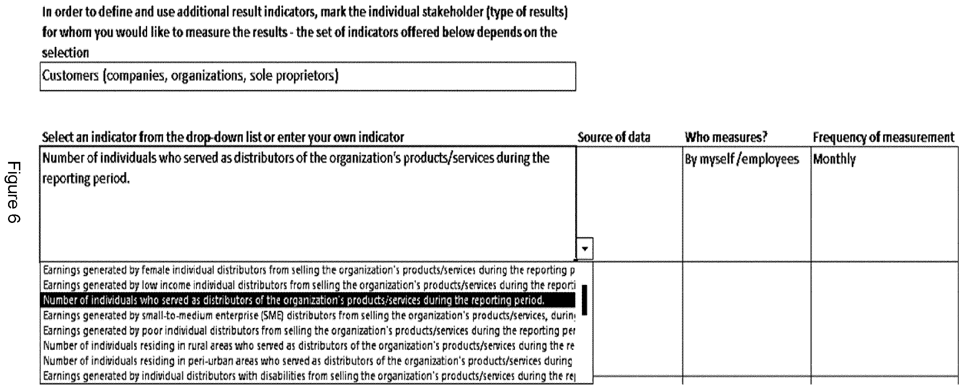

Figure 6 depicts an example of result indicators, independent of the field of activity and related to distributors - customers, for example, companies and/or enterprises.

### Step 2.5

In step 2.5, indirect results (i.e., long-term goals from ToC in Module 1) are automatically displayed for each defined social problem. The user defines the indicators and data sources for each indirect result and selects from the drop-down list who measures indicators and how often.

### Step 2.6

In this step of module 2, the reporter selects among the asset items reported in step 1.3 those that would like to measure changes resulting from the social enterprise's activities.

### Module 3: Measuring

The measurement is carried out using the defined indicators that the user has determined in module 2. In addition to the quantity/number/value for each indicator, the unit of measurement is given by the user based on their records, measurements, opinion, etc., and, if desired, a comment is provided.

Module 3 comprises at least four, possibly six steps, namely: (3.1) evaluation of stakeholder indicators, (3.2) evaluation of activity indicators, (3.3) evaluation of indicators of direct results, (3.4) evaluation of general indicators, (3.5) evaluation of indicators of results that are shown within the company (optional) and (3.6) evaluation of indicators of indirect results (optional).

### Step 3.1

In this step, the stakeholder type and target group based on the selection in module 2 is automatically displayed and the user inputs the number of addressed stakeholders of each group.

### Step 3.2

In step 3.2, the user enters the values of activity indicators, which are automatically displayed from step 2.2. Specifically, the user indicates the number/amount/value of the performed activities and the unit of measurement. For example, the number of hectares of revitalised area, or the number of employed people with disabilities, or the number of tons of recycled waste.

### Step 3.3

In this step, the user enters the values of indicators of direct results, which are automatically displayed from step 2.3. Specifically, the user indicates each indicator's value and unit of measurement and optionally adds a comment. This is similar to step 3.2 above.

### Step 3.4

In step 3.4, the user determines the values of general indicators (i.e., result indicators independent of the field of activity), which are automatically displayed from step 2.4. Specifically, the user indicates each indicator's value and unit of measurement and optionally adds a comment.

Steps 3.5 and 3.6 are optional features of Module 3 for Extended Reporting or Extended Reporting for Management purposes chosen in Module 1.

### Step 3.5

In this step, the user optionally determines the values of the indicators of indirect results, which are automatically displayed from step 2.5, and optionally provides a comment.

### Step 3.6

In this step of Module 3, the user optionally reports the value of assets (i.e., manufactured capital, human capital, intellectual capital, and financial capital), which are automatically displayed from step 2.6. The user determines the value of individual types of assets at the beginning and end of the year. For manufactured capital, the model allows evaluating assets owned by the social enterprise and assets used by the enterprise.

### Module 4: Results display and analysis

In this part, the computer-implemented model is arranged to allow the user to examine and analyse the results and to proceed to generate the report based on entered and analysed data. A more detailed analysis is foreseen in the case of measurement for Extended Reporting with the use for Management Purposes. Module 4 is configured to display the results and allow adding additional data, i.e., the values of previous years' indicators, planed values, etc., in order to allow the user to perform a more comprehensive performance analysis. In each step, the results and analysis refer to indicators following the structure of the previous Modules: (4.1) addressed stakeholders/target groups, (4.2) implemented activities, (4.3) direct results, (4.4) results independent of the organisation's field of operation, (4.5) indirect results (optional), (4.6) results reflected within the organisation (optional) and (4.7) performance analysis (with cost-benefit analysis) (optional).

### Step 4.1

In this step, the addressed stakeholders/target groups and their number in the year for which the user is reporting are automatically displayed from step 3.1. The user can add a comment if desired.

The user who selected Extended Reporting with the Management Purposes in Module 1 can add the values of the stakeholder indicators for the past three years. In this case, the annual growth rates of stakeholders/target groups are calculated below. Moreover, the user can enter the size of the target population of individual stakeholders for the reporting year and the previous three years. The proportion of addressed stakeholders/target groups (market share in business jargon) is calculated below. This allows the user to assess the development of the activities and the reach of the social enterprise.

### Step 4.2

In step 4.2, the numbers/values of implemented activities in the year for which the user reports are automatically displayed from step 3.2. The user can add a comment if desired.

The user who selected Extended Reporting with the use for Management Purposes in Module 1 can add the values of the activity indicators for the past three years. In this case, the annual growth rates of activities are calculated below. Additionally, an analysis of the implemented activities compared to the planned activities is possible if the user has data about planned activities available. Checking the progress of activities execution and especially how the activities are executed relative to the plan (targets) allows for identifying deviations from the plan and critical activities that need special attention in the future.

### Step 4.3

In step 4.3, the indicators of direct results and their values in the reporting year are automatically displayed from step 3.3. The user can add a comment if desired.

The user who selected Extended Reporting with the use for Management Purposes in Module 1 can add values of indicators for the past three years. In this case, the annual growth rates of direct results are calculated below. This provides additional information about the enterprise's operations as activities here are evaluated analysing the effects - results. Managing social enterprises often requires making decisions about investing limited resources in alternative uses. Thus, these organisations need to know where their operation (solving which social problem or performing which activity) can generate the highest social impact.

### Steps 4.4, 4.5 and 4.6

In these three steps, the result indicators, which are independent of the field of activity (4.4), indicators of indirect results (4.5) and indicators of results shown within the organisation (4.6) are displayed and analysed in the same way as described for indicators of direct results in Step 4.3. Steps 4.5 and 4.6 are optionally displayed for those who have selected Extended Reporting in Module 1.

### Step 4.7

The last step is also optionally displayed, depending on the selected reporting purpose. This step is available to the users who chose Extended Reporting with the use for Management Purposes in Module 1. Step 4.7 consists of analysis of productivity and efficiency with a cost-benefit analysis.

In this step, the achieved productivity is analysed using the number of addressed stakeholders/target groups and performed activities as the outputs. The number of stakeholders/target groups and activities for the reporting year and the previous three years are automatically displayed based on previous entries. The user enters the data on the number of employees and other collaborators (including volunteers). On this basis, productivity is calculated below as the number of addressed stakeholders/target groups per employee and the number of performed activities per employee. This is important information for a social enterprise's management as it reveals changes in productivity and at the same time allows comparison between activities or group of activities performed to solve a particular social problem. Being faced with limited resources, social enterprises can use this information to allocate resources to the activities where they are most productive and efficient.

The last part of this step represents the cost-benefit analysis at the activity level, grouped to each social problem addressed by the social enterprise. The model incorporates the logic of SROI, where the user has to estimate the costs and the benefits in monetary units. Next to the automatic display of the number of individual activities associated with a specific social problem, the user first specifies the costs for these activities in the relevant year and the previous three years. In addition, the user enters all other costs incurred in solving this social problem, such as overhead costs, etc. All costs incurred in solving a particular social problem are then summed. The following table automatically displays the benefits - all direct results (approximated by defined indicators) related to the analysed social problem for which then the user a monetary value. This is often more challenging than estimating the costs; however, it is necessary if the benefits are assessed with different indicators or if the user wants to compare cost-benefits ratios across groups of activities to solve different social problems. The values of benefits across different indicators are then summed. In the end, the cost-benefit ratio is calculated by dividing the sum of costs and the sum of benefits for all social problems or a set of activities performed to solve a particular social problem. This is probably the most valuable information that social enterprise management can use in effectively allocating limited resources.

### Module 5: The drafting of the report

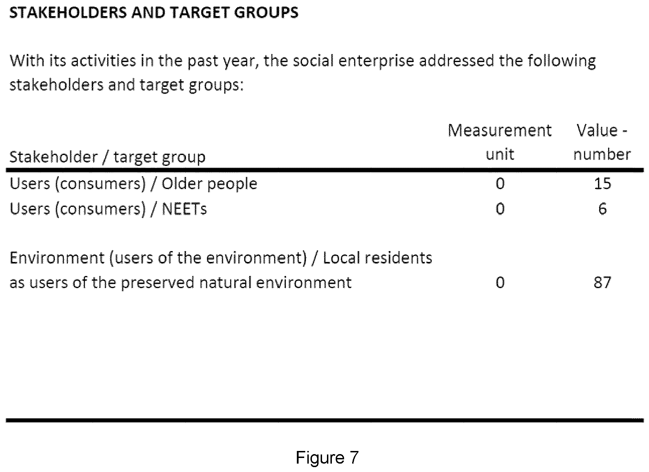

In Module 5, the computer-implemented model is arranged to generate the social impact report. The scope and structure are adapted to the purpose of measurement. By default, the option in which only mandatory reporting is envisaged, the following contents are displayed:
- general information about the social enterprise (registry and other general data),
- social problems that the social enterprise addressed with its activities and SDGs to which the social enterprise contributes,
- Indicators of addressed stakeholders/target groups (as exemplarily shown in Figure 7),
- Indicators performed activities,
- indicators of results - direct results and results independent of the field of activity.

In the displayed content, the user can enter comments and add a brief presentation of the field of operation and a description of the social enterprise's mission, vision and values. The report is structured similarly to financial reports.

The user can also add other relevant content. The choice of additional content depends on reporting purpose and and/or targeted audience. For example, a social enterprise will not disclose confidential information if reporting to the public. However, it might want to include some of this information when preparing a report for its investors or potential investors with whom it has a non-disclosure agreement. A report can also be prepared for internal use where the limitations for disclosure do not apply at all.

After choosing the relevant content and adding additional information, the social impact report created in Module 5 is prepared for printing. The report can also be saved as a pdf document. More advanced users with established social impact measurement and reporting can also integrate elements of the report (as well as other modules) into another document or report.

The model with the above-described modules and steps is programmed in VBA and is stored as an excel file. The latter can be stored on a computer-readable medium and/or a computer and may be used by a user to enter data, measure, and evaluate the social impact of the enterprise, wherein said social impact can be reported to any suitable organisation.

## Claims

1. A computer-implemented model for measuring and reporting social impact of social enterprises, said model comprising interconnected frameworks, standards and methodologies ToC, SDGs, IR Framework, IRIS+ and optionally SROI, wherein:
- Module 1 is configured to allow a user to enter information about a social enterprise, status, purpose of measurement, assets to perform activities, stakeholders, and social groups, as well as social problems and SDGs addressed by the social enterprise,
- Module 2 is arranged to allow the user to define a measurement plan, including a selection of indicators related to stakeholders, activities, direct results, results independent of the organisation's activities, and indirect results, as well as a selection of assets for which the change will be measured, wherein existing frameworks and system indicators IRIS+ and SDGs are integrated in an interrelated way so that only relevant indicators are shown for the selected field of activity and/or addressed stakeholders,
- Module 3 is configured to enable measurements of elements across the impact value chain using pre-defined indicators chosen in the second module, wherein quantity and/or a number and/or value, as well as a unit of measurement, is entered for each indicator,
- Module 4 is configured for examination and analysis of the results entered in module 3, said module 4 showing addressed stakeholders/target groups, performed activities, results and performance, wherein preferably change in time and realisation productivity and cost-benefit are analysed, and
- Module 5 is configured to generate a report on social impact based on entries in modules 1 to 4, said module 5 comprising:
∘ basic data on the social enterprise,
∘ social problems that the social enterprise addressed with its activities and SDGs to which the social enterprise contributes,
∘ indicators of addressed stakeholders/target groups,
∘ performed activities,
∘ indicators of results, which are direct results and results independent of the field of activity.

2. The computer-implemented model for determination of social impact of social enterprises according to claim 1, wherein the model comprises an implementation of cross-category IRIS+ to cover impacts of activities that are not directly connected to the field of activities but nevertheless address social and/or economic and/or environmental issues, wherein the list of indicators is provided with regards to participants for which impact is anticipated by the social enterprise.

3. The computer-implemented model for determination of social impact of social enterprises according to claim 1 or claim 2, wherein module 1 comprises up to eight steps: 1.1 general and registry data about a social enterprise, 1.2 activity status, 1.3 purpose of measurement, optionally step 1.4 assets of the social enterprise, 1.5 field of activity, 1.6 stakeholders and social groups addressed by the social enterprise, 1.7 addressed social problems and pursued SDGs, and 1.8 logical model of ToC.

4. The computer-implemented model for determination of social impact of social enterprises according to claim 3, wherein:
- In the first step 1.1, basic data for identifying the social enterprise, such as registration number, size, legal form of organisation and contact information, are entered;
- Step 1.2 is arranged to allow the user to report on whether the organisation is active or inactive by selecting one of the options from the drop-down list:
∘ the social enterprise does not carry out activities to solve social problems and/or does not create social impacts and
∘ the social enterprise carries out activities to solve social problems and/or create social impacts,
wherein this step the model is arranged to eliminate inactive social enterprises that choose the first option (i);
- Step 1.3 is configured to enable the user to indicate the purpose of social impact measurement from the drop-down list, which determines the scope and complexity of the subsequent measurement process, wherein the following option exist: (i) Mandatory Reporting, (ii) Extended Reporting (mandatory reporting and additional optional components) and (iii) Extended Reporting with the use for Management Purposes;
- Step 1.4 is arranged to define assets of social enterprise for those users that chose Extended Reporting in the previous step, wherein assets may be:
∘ manufactured capital (for example, buildings, equipment, land);
∘ human capital (for example, employees, permanent external staff, volunteers);
∘ intellectual capital (knowledge-based intangibles, such as intellectual property - patents, copyrights, etc. and organisational capital - business models and other strategic elements, policies, formalised internal procedures);
∘ financial capital (for example, equity, membership fees, loans, project financing or grants);
- Step 1.5 is arranged to enable the user to choose one or more fields of activity consistent with the IRIS+ Primary Impact Category, wherein the choice of the field of activity determines the framework of the content offered in module 3;
- Step 1.6 is configured to allow the user to select up to three stakeholders addressed by the social enterprise's activities from the drop-down list of the following five IRIS+ categories: users (consumers), distributors - customers (companies, organisations, sole proprietors), employees, environment (users of the environment) and suppliers; wherein optionally up to three target groups can be selected for each stakeholder;
- Step 1.7 is arranged to allow the user to identify up to five social problems the social enterprise addresses with its activities, wherein for each problem, the user selects up to three SDGs from a drop-down list, to which the social enterprise contributes by solving the stated problem;
- Step 1.8 is arranged to analyse the social enterprise's business model using ToC, wherein for each identified problem, the user first selects up to five pursued long-term goals from the drop-down list containing SDGs' targets, wherein the set of SDGs' targets depends on the SDGs selected in step 1.7, and/or the user may manually input the long-term goal, and wherein this step is configured to enter and define short-term goals as well as activities, conditions and the stakeholders needed to achieve the previously determined long-term goals.

5. The computer-implemented model for determination of social impact of social enterprises according to any of the preceding claims, wherein Module 2 is arranged to allow the social enterprise to prepare a plan for measuring social impacts, wherein the module 2 comprises at least four, preferably six steps: 2.1 indicators of stakeholders, 2.2 activity indicators, 2.3 indicators of direct results, 2.4 indicators of results independent of the field of activity, optionally 2.5 indicators of indirect results, i.e., outcomes and impacts, and optionally 2.6 the selection of items of assets for which the social enterprise would like to measure changes as a result of the enterprise's activities.

6. The computer-implemented model for determination of social impact of social enterprises according to claim 5, wherein
- in step 2.1 the user defines addressed stakeholders and their respective target groups selected in Module 1, for which measuring and reporting is performed in terms of the number of addressed individuals or organisations;
- in Step 2.2 a set of activities by social problems that the user defined in Module 1 is displayed, and the user describes each activity in more detail, followed by a selection of area of activity to which the individual activity belongs based on entries in step 1.4, wherein this defines the scope of possible results of IRIS+ indicators in the next step;
- in step 2.3, the model displays targeted direct results, i.e., short-term goals from Module 1 for each defined activity, wherein the user selects up to five IRIS+ indicators for each direct result from the drop-down list conditioned by selection in step 2.2; and wherein the user determines who measures the results and how often it is measured;
- in step 2.4 cross-category IRIS+ are implemented to allow the user to select indicators from the drop-down list of indicators from IRIS+ according to the previously selected IRIS+ stakeholders; and wherein the user determines who measures the results and how often it is measured;
- optionally, in step 2.5, indirect results, i.e., long-term goals defined in Module 1, are automatically displayed for each defined social problem and the user defines the indicators and data sources for each indirect result and selects from the drop-down list who measures indicators and how often.
- optionally, in step 2.6, the user selects among the asset items reported in step 1.3 those that would like to measure changes resulting from the social enterprise's activities.

7. The computer-implemented model for determination of social impact of social enterprises according to any of the preceding claims, wherein in module 3 measurement of social impact is performed using the indicators defined in module 2, wherein module 3 comprises at least four, possibly six steps: 3.1 evaluation of stakeholder indicators, 3.2 evaluation of activity indicators, 3.3 evaluation of indicators of direct results, 3.4 evaluation of general indicators, optionally 3.5 evaluation of indicators of results that are shown within the company and optionally 3.6 evaluation of indicators of indirect results.

8. The computer-implemented model for determination of social impact of social enterprises according to claim 7, wherein:
- step 3.1 is arranged to display the stakeholder type and target group selected in module 2 and the user inputs the number of addressed stakeholders of each group;
- in step 3.2, the user enters the values of activity indicators, which are automatically displayed from step 2.2, wherein the user indicates the number and/or amount and/or value of the performed activities and the unit of measurement;
- in this step 3.3, the user enters the values of indicators of direct results, which are automatically displayed from step 2.3, wherein the user indicates the number and/or amount and/or value for each indicator;
- in step 3.4, the user determines the values of general indicators, which are automatically displayed from step 2.4, wherein the user indicates the number and/or amount and/or value for each indicator;
- optionally, in step 3.5, the user optionally determines the values of the indicators of indirect results, which are automatically displayed from step 2.5, and optionally provides a comment;
- in step 3.6, the user reports the value of assets, which are automatically displayed from step 2.6, to allow the user to determine the value of individual types of assets at the beginning and end of the year.

9. The computer-implemented model for determination of social impact of social enterprises according to any of the preceding claims, wherein module 4 is arranged to allow the user to examine and analyse the results and to proceed to generate the report based on entered and analysed data in module 3, said module 4 comprising the following steps: 4.1 addressed stakeholders/target groups, 4.2 implemented activities, 4.3 direct results, 4.4 results independent of the organisation's field of operation, optionally 4.5 indirect results, optionally 4.6 results reflected within the organisation and optionally 4.7 performance analysis with cost-benefit analysis.

10. The computer-implemented model for determination of social impact of social enterprises according to claim 9, wherein
- step 4.1 displays addressed stakeholders/target groups and their number in the year for which the user is reporting from step 3.1, wherein further comments or values of the stakeholder indicators for the past three years may be additionally entered;
- in step 4.2, the numbers/values of implemented activities in the year for which the user reports are automatically displayed from step 3.2, wherein the user can add a comment as well as values of the activity indicators for the past three years;
- in step 4.3, the indicators of direct results and their values in the reporting year are automatically displayed from step 3.3, wherein the user can add a comment as well as values of the activity indicators for the past three years;
- in Steps 4.4, 4.5 and 4.6, the result indicators, which are independent of the field of activity (4.4), indicators of indirect results (4.5) and indicators of results shown within the organisation (4.6) are displayed and analysed in the same way as described for indicators of direct results in Step 4.3;
- step 4.7 is arranged to perform productivity and efficiency analysis with a cost-benefit analysis, wherein the achieved productivity is calculated as the number of addressed stakeholders/target groups per employee and the number of performed activities per employee.

11. The computer-implemented model for determination of social impact of social enterprises according to claim 10, wherein and the cost-benefit analysis at the activity level grouped to each social problem addressed by the social enterprise incorporates the logic of SROI, wherein all costs incurred in solving a particular social problem are summed and the values of benefits across different indicators are summed so that the cost-benefit ratio is calculated by dividing the sum of costs and the sum of benefits for all social problems or set of activities performed to solve a particular social problem.

12. The computer-implemented model for determination of social impact of social enterprises according to any of the preceding claims, wherein the computer-implemented model is programmed in Visual Basic for Applications (VBA) programming language with enabled macros.

13. The computer-implemented model for determination of social impact of social enterprises according to any of the preceding claims, wherein the computer-implemented model is an excel file with executable instructions upon entry of inputs into dedicated fields.

14. A computer-readable medium with a stored computer-implemented model according to any preceding claims.

15. A computer with the computer-implemented model according to any preceding claims.
